# EUROPEAN PATENT APPLICATION

(11) **EP 4 585 887 A1**
(43) Date of publication of application: **16.07.2025**
(21) Application number: 22965690.5
(22) Date of filing: 14.11.2022
(51) Int. Cl.: G01J 1/02, H10N 10/00

(54) **THERMAL INFRARED DETECTOR AND METHOD FOR MANUFACTURING THERMAL INFRARED DETECTOR**

(71) Applicant: MITSUBISHI ELECTRIC CORPORATION, Chiyoda-ku Tokyo 100-8310 (JP)
(72) Inventor: KOBAYASHI, Satoi, Tokyo 100-8310 (JP); SHINTANI, Kenji, Tokyo 100-8310 (JP); FUJISAWA, Daisuke, Tokyo 100-8310 (JP); MAEGAWA, Tomohiro, Tokyo 100-8310 (JP)
(74) Representative: Pfenning, Meinig & Partner mbB
(86) International application number: PCT/JP2022/042158
(87) International publication number: WO 2024/105713

(57) **Abstract**

Disclosed is a thermal infrared detector (100) including: an infrared detection unit (12) which is provided on a surface of a substrate (11), and which has an element (103) to convert a temperature change caused by an incidence of an infrared ray into an electric signal; a peripheral circuit (13) which is provided in such a way as to surround the infrared detection unit (12) on the surface of the substrate (11), to read the electric signal from the element (103); a sealing part (14) which is provided for the peripheral circuit (13) in such a way as to surround the infrared detection unit (12); a sealing window (15) which is provided on the sealing part (14), and which forms an internal space in a sealed state for accommodating the infrared detection unit (12), together with the substrate (11), the peripheral circuit (13), and the sealing part (14); an infrared absorption film (16) to cover at least surface portions inside the sealing part (14), out of surfaces of the peripheral circuit (13); and a heat waste wire (17) which is provided inside the peripheral circuit (13), and which thermally connects between the substrate (11) and the infrared absorption film (16).

## Description

### TECHNICAL FIELD

The present disclosure relates to a thermal infrared detector and a method of producing the thermal infrared detector.

### BACKGROUND ART

Infrared detectors which detect an infrared ray are roughly classified into thermal infrared detectors which use a temperature change caused by the absorption of heat energy of an infrared ray, and quantum infrared detectors which use carrier excitation caused by the absorption of an infrared ray, according to their principles of operation.

Quantum infrared detectors have a low operating temperature, and it is necessary to cool elements themselves used for quantum infrared detectors to around minus 200 degrees Celsius using a refrigerating machine. Therefore, quantum infrared detectors not only have a complicated structure but also needs maintenance of the refrigerating machine. As a result, quantum infrared detectors have a drawback that the cost of producing them is high, and it is hard to handle them.

Thermal infrared detectors can operate under room temperatures and do not need a refrigerating machine. Further, in thermal infrared detectors, an infrared detection unit having a temperature sensor, and a signal readout circuit can be simultaneously formed in a semiconductor manufacturing line. Therefore, it is possible to achieve a downsizing and a cost reduction for thermal infrared detectors, compared with those of quantum infrared detectors. Therefore, thermal infrared detectors are used in most cases in the field of consumer products used for security and for vehicle mounting.

Further, for thermal infrared detectors, efforts to reduce the cost of optical systems, which tend to be expensive have been advanced. Concretely, the material of lenses is changed from an expensive glass material, such as Germanium (Ge) conventionally used, to an inexpensive glass material, such as Silicon (Si) or chalcogenide glass. Further, by reducing the number of lenses, a simplification of the optical system is achieved. In addition, by reducing the pixel pitch, thereby reducing the image circle and hence reducing the lens diameters, the amount of glass materials used is reduced.

However, the above-mentioned cost reduction method has a trade-off relation with the image formation of optical systems. Therefore, in the case of using the above-mentioned cost reduction method, there is a possibility of causing an increase in the degree of out-of-focus and an increase in stray light. Especially when stray light which is incident on a peripheral circuit is scattered multiple times between a sealing window and a sealing part and is incident on an infrared detection unit, there arises a problem that the accuracy of detection of a temperature change in infrared rays is reduced.

A technology of suppressing stray light is disclosed in Patent Literature 1.

### CITATION LIST

### PATENT LITERATURE

Patent Literature 1: Japanese Unexamined Patent Application Publication No. JP 2010238726 A

### SUMMARY OF INVENTION

### TECHNICAL PROBLEM

The stray light suppressing technology disclosed in Patent Literature 1 absorbs stray light using a light absorption film. However, a problem with the stray light suppressing technology is that it is impossible to properly deal with the heat of the absorbed stray light.

The present disclosure is made in order to solve the above-mentioned problem, and it is therefore an object of the present disclosure to provide a thermal infrared detector that can exhaust the heat of the absorbed stray light to a member having a large heat capacity.

### SOLUTION TO PROBLEM

A thermal infrared detector according to the present disclosure includes: an infrared detection unit which is provided on a surface of a substrate, and which has an element to convert a temperature change caused by an incidence of an infrared ray into an electric signal; a peripheral circuit which is provided in such a way as to surround the infrared detection unit on the surface of the substrate, to read the electric signal from the element; a sealing part which is provided for the peripheral circuit in such a way as to surround the infrared detection unit; a sealing window which is provided on the sealing part, and which forms an internal space in a sealed state for accommodating the infrared detection unit, together with the substrate, the peripheral circuit, and the sealing part; an infrared absorption film to cover at least a surface portion inside the sealing part, out of a surface of the peripheral circuit; and a heat waste wire which is provided inside the peripheral circuit, and which thermally connects between the substrate and the infrared absorption film.

### ADVANTAGEOUS EFFECTS OF INVENTION

According to the present disclosure, the heat of absorbed stray light can be exhausted to the substrate having a large heat capacity.

### BRIEF DESCRIPTION OF DRAWINGS

Fig. 1 is a plan view of a thermal infrared detector according to Embodiment 1;
Fig. 2 is a cross-sectional view taken along the II-II line of Fig. 1;
Fig. 3A is a cross-sectional view showing a method of producing the thermal infrared detector;
Fig. 3B is a cross-sectional view following Fig. 3A and showing the method of producing the thermal infrared detector;
Fig. 3C is a cross-sectional view following Fig. 3B and showing the method of producing the thermal infrared detector;
Fig. 3D is a cross-sectional view following Fig. 3C and showing the method of producing the thermal infrared detector;
Fig. 3E is a cross-sectional view following Fig. 3D and showing the method of producing the thermal infrared detector;
Fig. 4 is a cross-sectional view of a thermal infrared detector according to Embodiment 2;
Fig. 5 is a cross-sectional view of a thermal infrared detector according to Embodiment 3;
Fig. 6 is a cross-sectional view of a thermal infrared detector according to Embodiment 4;
Fig. 7 is a plan view of a thermal infrared detector according to Embodiment 5;
Fig. 8 is a cross-sectional view taken along the VIII-VIII line of Fig. 7; and
Fig. 9 is a cross-sectional view of a thermal infrared detector according to Embodiment 6.

### DESCRIPTION OF EMBODIMENTS

Hereinafter, in order to explain the present disclosure in greater detail, embodiments of the present disclosure will be explained with reference to the accompanying drawings.

### Embodiment 1.

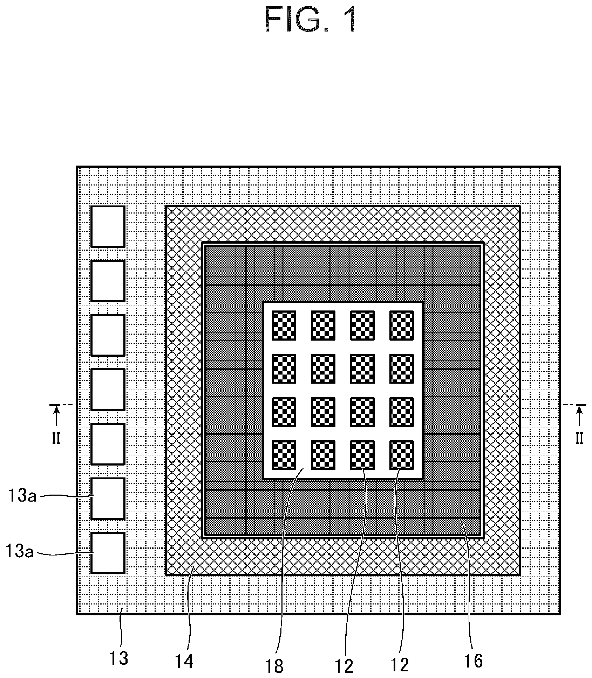

A thermal infrared detector 100 according to Embodiment 1 will be explained using Figs. 1, 2, and 3A to 3E.

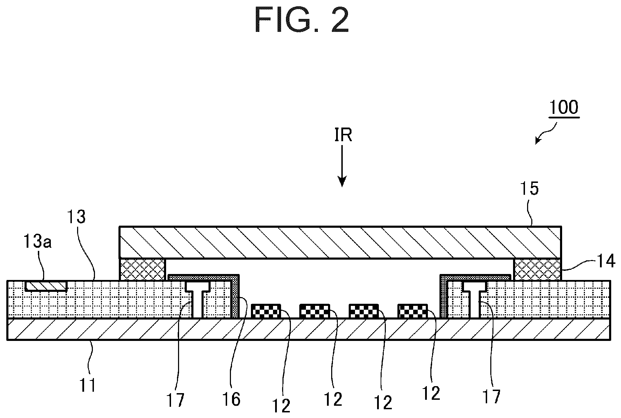

First, the structure of the thermal infrared detector 100 according to Embodiment 1 will be explained using Figs. 1 and 2. Fig. 1 is a plan view of the thermal infrared detector 100 according to Embodiment 1. Fig. 2 is a cross-sectional view taken along the I-I line of Fig. 1. Fig. 1 shows a plan view in a state where a sealing window 15 shown in Fig. 2 is omitted.

In the thermal infrared detector 100 shown in Figs. 1 and 2, this thermal infrared detector 100 includes a substrate 11, infrared detection units 12, a peripheral circuit 13, a sealing part 14, a sealing window 15, an infrared absorption film 16, and a heat waste wire 17. An arrow IR described in Fig. 1 shows the direction of incidence of an infrared ray.

The infrared detection units 12 are arranged, on a surface of the substrate 11 which serves as a mounting surface, at equal pitch intervals in an array form. Each of these infrared detection units 12 converts an infrared ray absorbed thereby into heat, and converts a temperature change caused by the heat after conversion into an electric signal and outputs the electric signal.

The peripheral circuit 13 is placed on the substrate 11 in such a way as to surround the multiple infrared detection units 12 which are arranged in the array form. Concretely, the peripheral circuit 13 is formed into a rectangular frame shape, and surrounds, in a rectangular shape, around the multiple infrared detection units 12 arranged in the array form. More specifically, a rectangular inner space surrounded by the peripheral circuit 13 serves as an infrared detection area (pixel area) 18. Then, the peripheral circuit 13 reads the electric signal output from each infrared detection unit 12 via a readout circuit on the substrate 11.

Further, the peripheral circuit 13 has multiple electrode pads 13a. These electrode pads 13a are provided on an upper surface of the peripheral circuit 13, and are arranged outside the sealing part 14 and the sealing window 15 which will be mentioned later. More specifically, the peripheral circuit 13 reads the electric signal output from each infrared detection unit 12 from the readout circuit on the substrate 11, and outputs this electric signal read thereby to outside the detector via a corresponding one of the electrode pads 13a.

The sealing part 14 is provided in such a way as to seal the upper surface of the peripheral circuit 13.
The sealing part 14 is a sealing frame which is formed into a rectangular frame shape. Therefore, the sealing part 14 surrounds, in a rectangular shape, the internal space of the peripheral circuit 13, in other words, the periphery of the infrared detection area 18, on the upper surface of the peripheral circuit 13.

The sealing window 15 is provided in such a way as to an upper surface of the sealing part 14. The sealing window 15 is formed into a flat plate rectangular shape. The sealing part 14 and the sealing window 15 have the same size. Therefore, the space which is surrounded by the surface of the substrate 11, an inner surface and the upper surface of the peripheral circuit 13, an inner surface of the sealing part 14, and a rear surface of the sealing window 15 is placed in a sealed state. More specifically, all the infrared detection units 12 are arranged in the sealed space.

The infrared absorption film 16 absorbs infrared rays which are stray light rays. The infrared absorption film 16 is provided on at least surface portions inside the sealing part 14, out of the surfaces of the peripheral circuit 13. Figs. 1 and 2 show an example in which the infrared absorption film 16 is provided in such a way as to cover the whole of the surface portions inside the sealing part 14.

The heat waste wire 17 is provided inside the peripheral circuit 13. This heat waste wire 17 thermally connects between the substrate 11 and the infrared absorption film 16. Therefore, the heat waste wire 17 can propagate the heat of an infrared ray (stray light) which the infrared absorption film 16 has absorbed to the substrate 11. At least one heat waste wire 17 should just be provided. Fig. 1 shows an example in which multiple heat waste wires 17 are provided.

Here, typically, an infrared ray sent to the thermal infrared detector 100 passes through the sealing window 15, is incident on an infrared detection unit 12, and an electric signal corresponding to a temperature change in the heat of the incident infrared ray is outputted.

In contrast with this, among infrared rays sent to the thermal infrared detector, there is an infrared ray which passes through the sealing window 15, but is incident on a surface of the peripheral circuit 13, inside the sealing part 14, without being incident on any infrared detection unit 12. There is a case in which, for example, an infrared ray (referred to as stray light hereinafter) incident on the surface of the peripheral circuit in this way is reflected by the surface, and, after being scattered by the inner surface of the sealing part or the front and rear surfaces of the sealing window, or those surfaces, is incident on an infrared detection unit 12. In this case, the thermal infrared detector has a possibility that its accuracy of detecting a temperature change in an infrared ray is reduced.

Accordingly, in the thermal infrared detector 100 according to Embodiment 1, the infrared absorption film 16 is provided on the surface portions of the peripheral circuit 13, where stray light can be incident, inside the sealing part 14. Therefore, the infrared absorption film 16 can absorb the heat of the stray light. As a result, the thermal infrared detector 100 can suppress the reduction in the detection accuracy which is caused by the stray light.

Further, the heat of the stray light absorbed by the infrared absorption film 16 is exhausted to the substrate 11 via the heat waste wires 17. At this time, because the substrate 11 serves as a heat sink having a large heat capacity, the substrate can quickly absorb the heat of the stray light. Therefore, the thermal infrared detector 100 can reduce the heat noise caused by the heat of the stray light. Further, the thermal infrared detector 100 can prevent the point of the infrared absorption film 16 at which the infrared absorption film has absorbed the stray light from serving as a new heat source.

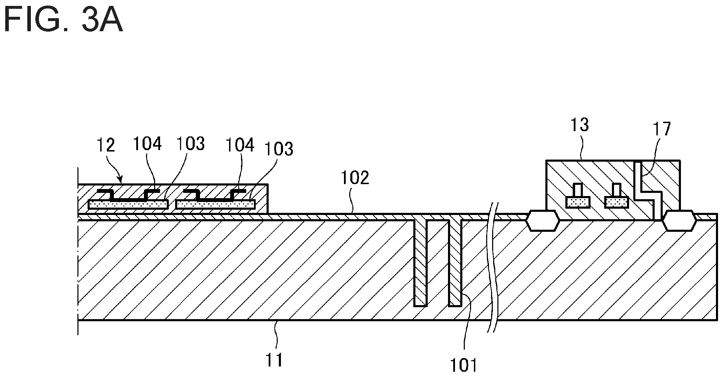

Next, a method of producing the thermal infrared detector 100 according to Embodiment 1 will be explained using Figs. 3A to 3E in order. Figs. 3A to 3D are cross-sectional views showing a right-hand side half portion in the process of producing the thermal infrared detector 100, and the same structure as that of the right-hand side half portion is placed in linear symmetry in a left-hand side half portion which is omitted from the figures.

First, as shown in Fig. 3A, in a substrate 11, such as an Si substrate and an SOI substrate, an aperture is formed at a predetermined position of each unit pixel by means of dry etching, for example. In addition, by forming an insulation film 102 which is an SiO₂ film on a surface of the substrate 11 by means of a chemical vapor deposition (CVD) method or the like, a trench structure 101 which can be electrically connected to a region of a peripheral circuit 13 is formed.

Here, SiO₂ films are provided as materials used for the trench structure 101 and the insulation film 102. However, those materials are not limited to SiO₂ films as long as the materials ensure the insulation of infrared detection units and the Si substrate and provide a high etching selectivity ratio to the Si substrate.

After that, after the SiO₂ film on the surface of the substrate 11 is removed by means of a CMP method or the like and is flattened, and the insulation film 102 is formed, infrared detection units 12 and the peripheral circuit 13 are formed. As each infrared detection unit 12, an element 103 which converts heat detected thereby into an electric signal based on a change in a voltage value is used. This element 103 is, for example, a semiconductor element having a temperature characteristic such as a diode, a metal film element, or the like. In the case where multiple elements 103 are used, they are electrically connected to each other by connection wires 104.

A heat waste wire 17 is formed at the same time that the peripheral circuit 13 is formed. Although the material of this heat waste wire 17 should just have high heat conductivity, and, for example, Al, Cu, Co, and compounds of Al, Cu, and Co, TiN, Ti, a Pt compound, WSi, etc. are provided as the material of this heat waste wire, the heat waste wire does not need to be a conductor and the material of the heat waste wire is not limited to these materials. Especially, because Al, Cu, and compound materials of Al and Cu are materials used for multilayer interconnection in a circuit, the heat waste wire 17 can be formed at the same time that circuit wires are formed. Therefore, the cost of producing the heat waste wire 17 is reduced.

The heat waste wire 17 may be formed of multiple materials as long as the heat waste wire can be thermally connected. The heat waste wire 17 is deposited by means of a CVD method or a physical vapor deposition (PVD) method, and is formed inside a sealing part 14, which will be mentioned later, using a photoengraving process technology and an etching technology in such a way as to be thermally connected to an infrared absorption film 16. At this time, it is preferable that the heat waste wire 17 thermally connected to the infrared absorption film 16 is placed in such a way as to extend along at least one side of an infrared detection area 18 shown in Fig. 1. Further, the heat waste wire 17 may serve as a grounding line. In this producing process, the substrate 11 and the heat waste wire 17 are connected.

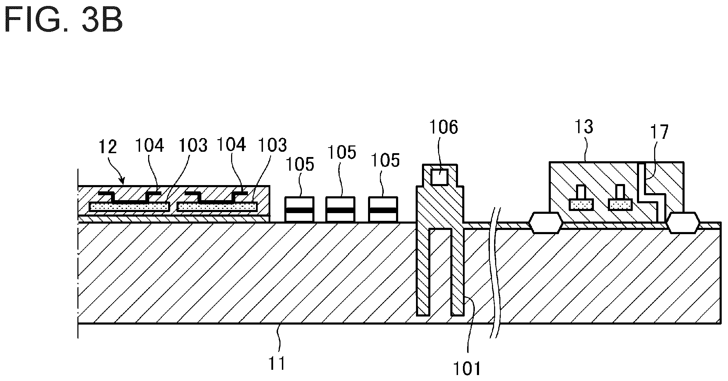

Next, multiple insulation supporting legs 105 are formed on the surface of the substrate 11, as shown in Fig. 3B. Each insulation supporting leg 105 has a metal wire for reading an electric signal from an infrared detection unit 12. It is preferable that each insulation supporting leg 105 is TiN, Ti, a Co compound, a Pt compound or WSi, or a layered structure of these materials.

Then, a wire 106 which is made of Al and a compound of Al is formed on the trench structure 101. In addition, an insulation film made of an SiO₂ film, an SiN film, or the like is formed on the wire 106.

Next, the above-mentioned insulation film is processed to have a desired shape using a typical photoengraving technology and an etching technology. Through this series of producing processes, the infrared detection unit 12 is connected to the wire 106 via the multiple insulation supporting legs 105. Further, the wire 106 is connected to the peripheral circuit 13.

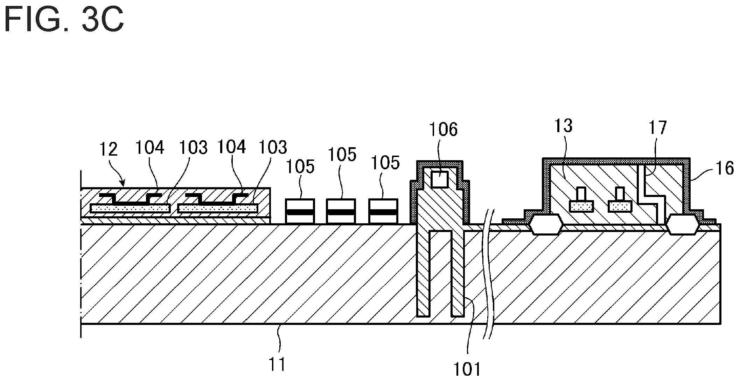

Next, the infrared absorption film 16 which is made of nitride, oxide, or the like is formed on surfaces of the peripheral circuit 13 by means of the CVD method, the PVD method, or the like, as shown in Fig. 3C. Although SiN, TiN, TiO, VN, VO, CoO, CrO, NiO, and so on are provided as concrete examples of the material of the infrared absorption film 16, the infrared absorption film may be multi-layered using those materials and used, in order to raise the rate of absorption of infrared rays.

Further, in order to avoid an etching damage to the infrared absorption film 16 in a hollow forming process which will be mentioned later, an SiO₂ thin film or the like may be provided on the infrared absorption film 16 in such a way that the SiO₂ thin film or the like has a film thickness which does not provide heat insulation.

Then, using a photoengraving technology and an etching technology, the infrared absorption film 16 formed on portions other than the surfaces of the peripheral circuit 13 is removed. In this producing process, a thermal connection is established between the substrate 11 and the infrared absorption film 16 by the heat waste wire 17.

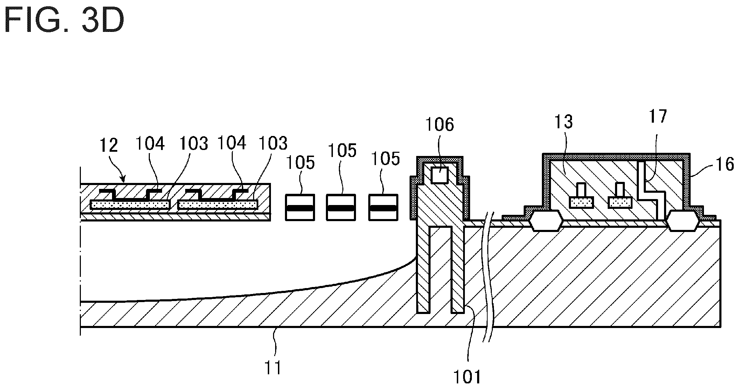

Next, the substrate 11 is etched using an etching gas with a high etching selectivity ratio of Si and SiO₂, etc., as shown in Fig. 3D. Therefore, hollow heat insulation to the infrared detection units 12 and the insulation supporting legs 105 is achieved for the substrate 11.

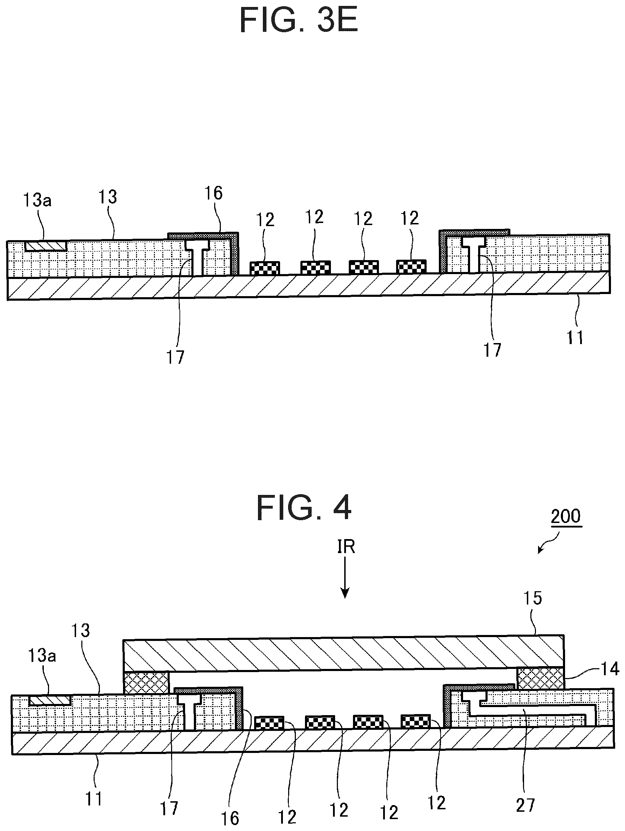

Fig. 3E is a schematic cross-sectional view of the whole of the thermal infrared detector 100 after this producing process.

Finally, the infrared detection units 12 are vacuum-sealed, as shown in Fig. 2. Concretely, a sealing part 14 which includes multiple metal layers is formed on a surface of the peripheral circuit 13. This sealing part 14 is formed of the multiple metal layers which are made of, for example, Au, Ni, or Cr. The multiple metal layers are formed using plating, a PVD method, or the like. As a result, the multiple metal layers which are made of, for example, Au, Ni, or Cr are formed on an outer peripheral portion of a lower surface of a sealing window 15.

Although the sealing window 15 is usually provided so as to have a size larger than an image formation area provided by an optical system, a reflection film which is made of Au, Ni, or Cr may be disposed on a portion of the sealing window 15, the portion being outside the image formation area. In this case, using a photoengraving technology and an etching technology, the reflection film is formed in such a way that multiple metal layers remain only outside the image formation area. As the material of the sealing window 15, Si, Ge, chalcogenide glass, or the like is used.

Next, a soldering paste (not illustrated) is applied onto the sealing part 14, and this applied soldering paste and the multiple metal layers of the sealing window 15 are piled up.

Next, the sealing window 15 provided with the sealing part 14 is heated in a vacuum chamber including an upper heater and a lower heater. Therefore, the above-mentioned soldering paste melts, and the sealing part 14 and the sealing window 15 are joined and fixed.

Then, the heating using the vacuum chamber is stopped, the sealing part 14 and the sealing window 15 which are joined and fixed to each other are cooled until they have a temperature less than or equal to the melting point of the soldering paste. As a result, the thermal infrared detector 100 shown in Fig. 2 is finished.

As mentioned above, the thermal infrared detector 100 according to Embodiment 1 includes: the infrared detection units 12 which are provided on a surface of the substrate 11, and each of which has an element 103 to convert a temperature change caused by an incidence of an infrared ray into an electric signal; the peripheral circuit 13 which is provided in such a way as to surround the infrared detection units 12 on the surface of the substrate 11, to read the electric signal from the element 103; the sealing part 14 which is provided for the peripheral circuit 13 in such a way as to surround the infrared detection units 12; the sealing window 15 which is provided on the sealing part 14, and which forms the internal space in the sealed state for accommodating the infrared detection units 12, together with the substrate 11, the peripheral circuit 13, and the sealing part 14; the infrared absorption film 16 to cover at least surface portions inside the sealing part 14, out of the surfaces of the peripheral circuit 13; and the heat waste wire 17 which is provided inside the peripheral circuit 13, and which thermally connects between the substrate 11 and the infrared absorption film 16. Therefore, the thermal infrared detector 100 can exhaust the heat of stray light absorbed thereby to the substrate 11 having a large heat capacity.

In the thermal infrared detector 100, the infrared absorption film 16 provided on the surface of the peripheral circuit 13 and a grounding line provided in the peripheral circuit 13 are electrically connected. Therefore, the thermal infrared detector 100 can prevent a reduction in the operation speed of the peripheral circuit 13, the reduction being caused by an increase in the electric capacity.

In the thermal infrared detector 100, the infrared absorption film 16 provided on the surface of the peripheral circuit 13 is provided in such a way as to avoid the electric wires which the peripheral circuit 13 has. Therefore, the thermal infrared detector 100 can prevent a reduction in the operation speed of the peripheral circuit 13, the reduction being caused by an increase in the electric capacity.

In the thermal infrared detector 100, the element 103 is multiple diodes connected in series to each other. Therefore, the thermal infrared detector 100 can be applied to diode types.

In the thermal infrared detector 100, the infrared absorption film 16 is formed of the same material as that of the connection wires 104 between diodes. Therefore, in the thermal infrared detector 100, the cost of producing the element 103 can be reduced.

In the thermal infrared detector 100, the infrared absorption film 16 is a silicon nitride film. Therefore, in the thermal infrared detector 100, because a silicon nitride film is a material which is used in the semiconductor producing process, the cost of producing the infrared absorption film 16 can be reduced.

In the thermal infrared detector 100, the infrared absorption film 16 is an oxidized or nitrided metal film. Therefore, in the thermal infrared detector 100, because a metal film is a material which is used in the semiconductor producing process, the cost of producing the infrared absorption film 16 can be reduced.

### Embodiment 2.

A thermal infrared detector 200 according to Embodiment 2 will be explained using Fig. 4. Fig. 4 is a cross-sectional view of the thermal infrared detector 200 according to Embodiment 2. Components having the same functions as those of the components explained in the above-mentioned embodiment are denoted by the same reference signs, and an explanation of the components will be omitted hereinafter.

As shown in Fig. 4, the thermal infrared detector 200 according to Embodiment 2 has a structure in which a heat waste wire 27 is added to the structure of the thermal infrared detector 100 according to Embodiment 1. More specifically, the thermal infrared detector 200 according to Embodiment 2 includes a heat waste wire 17 and the heat waste wire 27. These heat waste wires 17 and 27 are provided inside a peripheral circuit 13. Although Fig. 4 shows an example in which the thermal infrared detector 200 includes the heat waste wires 17 and 27, the thermal infrared detector 200 may include only the heat waste wire 27 out of the heat waste wires 17 and 27.

The heat waste wire 27 thermally connects between a substrate 11 and an infrared absorption film 16. At this time, the heat waste wire 27 is placed in such a way as to cross a sealing part 14. More specifically, an end (inner end) of the heat waste wire 27 is placed inside the sealing part 14, and is thermally connected to the infrared absorption film 16. On the other hand, another end (outer end) of the heat waste wire 27 is placed outside the sealing part 14, and is thermally connected to the substrate 11.

Therefore, the heat waste wire 27 can exhaust the heat of stray light absorbed by the infrared absorption film 16 to outside an infrared detection area 18. Therefore, the thermal infrared detector 200 can further reduce a heat noise caused by the heat of the stray light.

The heat waste wire 27 is formed, at the time of forming the peripheral circuit 13 in the producing process of Fig. 3A, by means of a photoengraving technology and an etching technology in such a way as to cross the sealing part 14 between the inside and outside of the sealing part 14.

As mentioned above, in the thermal infrared detector 200 according to Embodiment 2, the end of the heat waste wire 27 is thermally connected to the infrared absorption film 16, inside the sealing part 14, and the other end of the heat waste wire 27 is thermally connected to the substrate 11, outside the sealing part 14. Therefore, the thermal infrared detector 200 can exhaust the heat of the stray light absorbed by the infrared absorption film 16 to outside the infrared detection area 18.

### Embodiment 3.

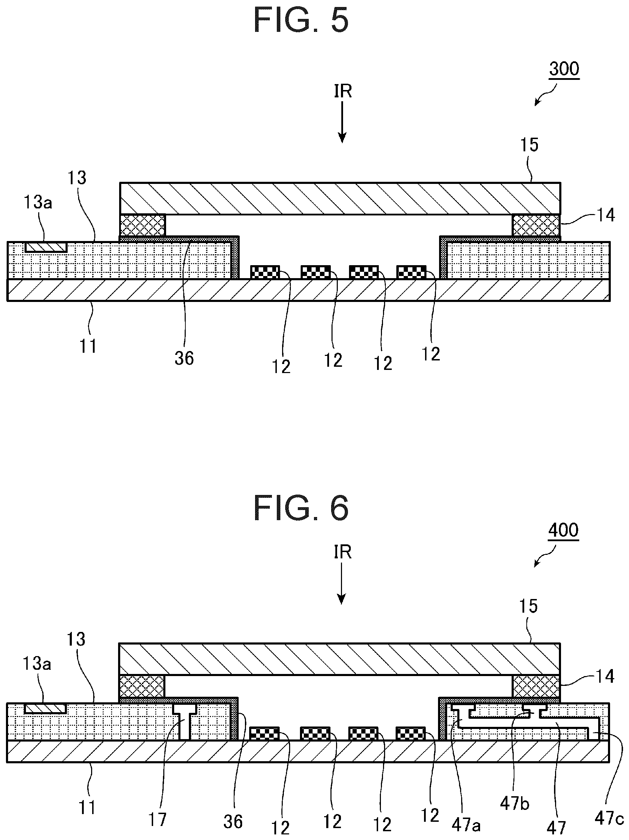

A thermal infrared detector 300 according to Embodiment 3 will be explained using Fig. 5. Fig. 5 is a cross-sectional view of the thermal infrared detector 300 according to Embodiment 3. Components having the same functions as those of the components explained in the above-mentioned embodiments are denoted by the same reference signs, and an explanation of the components will be omitted hereinafter.

As shown in Fig. 5, the thermal infrared detector 300 according to Embodiment 3 has a structure in which the thermal infrared detector includes an infrared absorption film 36 instead of the infrared absorption film 16 and the heat waste wire 17 of the thermal infrared detector 100 according to Embodiment 1.

The infrared absorption film 36 absorbs an infrared ray which is stray light. Although this infrared absorption film 36 is provided in such a way as to cover surfaces of a peripheral circuit 13, its outer peripheral portion is sandwiched between a substrate 11 and a sealing part 14. Therefore, the infrared absorption film 36 is thermally connected to a sealing window 15 via the sealing part 14.

Therefore, the infrared absorption film 36 can exhaust the heat of stray light absorbed thereby to the sealing window 15 via the sealing part 14. Because the sealing window 15 plays the role of a heat sink having a large heat capacity at this time, the sealing window can quickly absorb the heat of the stray light.

The infrared absorption film 36 is formed in such a way as to remain on the sealing part 14 by means of a photoengraving technology in the producing process of Figs. 3D and 3E.

As mentioned above, the thermal infrared detector 300 according to Embodiment 3 includes: infrared detection units 12 which are provided on a surface of the substrate 11, and each of which has an element 103 to convert a temperature change caused by an incidence of an infrared ray into an electric signal; the peripheral circuit 13 which is provided in such a way as to surround the infrared detection units 12 on the surface of the substrate 11, to read the electric signal from the element 103; the sealing part 14 which is provided for the peripheral circuit 13 in such a way as to surround the infrared detection units 12; the sealing window 15 which is provided on the sealing part 14, and which forms an internal space in a sealed state for accommodating the infrared detection units 12, together with the substrate 11, the peripheral circuit 13, and the sealing part 14; and the infrared absorption film 36 to cover at least surface portions inside the sealing part 14, out of the surfaces of the peripheral circuit 13, the infrared absorption film 36 being thermally connected to the sealing part 14. Therefore, the thermal infrared detector 300 can exhaust the heat of stray light absorbed thereby to the sealing window 15 having a large heat capacity.

### Embodiment 4.

A thermal infrared detector 400 according to Embodiment 4 will be explained using Fig. 6. Fig. 6 is a cross-sectional view of the thermal infrared detector 400 according to Embodiment 4. Components having the same functions as those of the components explained in the above-mentioned embodiments are denoted by the same reference signs, and an explanation of the components will be omitted hereinafter.

As shown in Fig. 6, the thermal infrared detector 400 according to Embodiment 4 has a structure in which heat waste wires 17 and 47 are added to the structure of the thermal infrared detector 300 according to Embodiment 3. Although Fig. 6 shows an example in which the thermal infrared detector 400 includes the heat waste wires 17 and 47, the thermal infrared detector 400 may include only the heat waste wire 47 out of the heat waste wires 17 and 47. Further, the thermal infrared detector 400 may include a heat waste wire 27 in addition to the heat waste wires 17 and 47.

The heat waste wire 47 thermally connects between a substrate 11 and an infrared absorption film 36. At this time, the heat waste wire 47 is placed in such a way as to cross a sealing part 14. Further, the heat waste wire 47 has three ends 47a, 47b, and 47c. The first end (inner end) 47a is placed inside the sealing part 14, and is thermally connected to the infrared absorption film 36. The second end (center end) 47b is placed at a position corresponding to the sealing part 14. The sealing part 14 is thermally connected to a sealing window 15 via the infrared absorption film 36 and the sealing part 14. The third end (outer end) 47c is placed outside the sealing part 14, and is thermally connected to the substrate 11.

Therefore, the heat waste wire 47 can propagate the heat of stray light absorbed by the infrared absorption film 36 from the end 47a to the end 47b and from the end 47a to the end 47c. Therefore, the heat waste wire 47 can exhaust the heat of the stray light to the sealing window 15 having a large heat capacity via the infrared absorption film 36 and the sealing part 14. Further, the heat waste wire 47 can exhaust the heat of the stray light to the substrate 11 having a large heat capacity. As a result, the heat waste wire 47 can quickly exhaust the heat of the stray light absorbed by the infrared absorption film 36.

The heat waste wire 47 is formed in the producing process of Fig. 3A by means of a film forming technology, a photoengraving technology, and an etching technology in such a way as to be thermally connected to the substrate 11 and the sealing part 14. Further, the heat waste wire 47 is formed at the time of forming an infrared absorption film 16 in the producing process of Fig. 3D by means of a photoengraving technology in such a way that the infrared absorption film 16 remains on the sealing part 14.

As mentioned above, the thermal infrared detector 400 according to Embodiment 4 includes the heat waste wire 47 which is provided inside the peripheral circuit 13. The heat waste wire 47 is thermally connected to the infrared absorption film 36, inside the sealing part 14, and is thermally connected to a portion of the infrared absorption film 36, the portion being thermally connected to the sealing part 14, and the heat waste wire 47 is thermally connected to the substrate 11, outside the sealing part 14. Therefore, the thermal infrared detector 400 can exhaust the heat of stray light absorbed thereby to the substrate 11 and the sealing window 15 which have a large heat capacity.

### Embodiment 5.

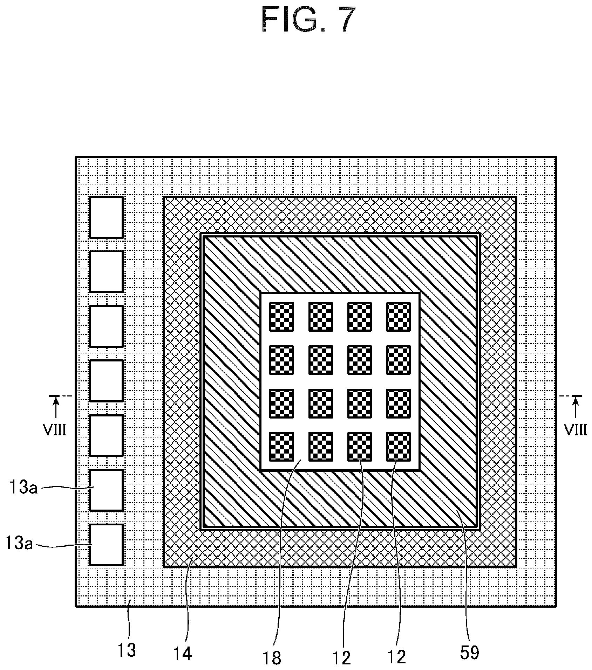

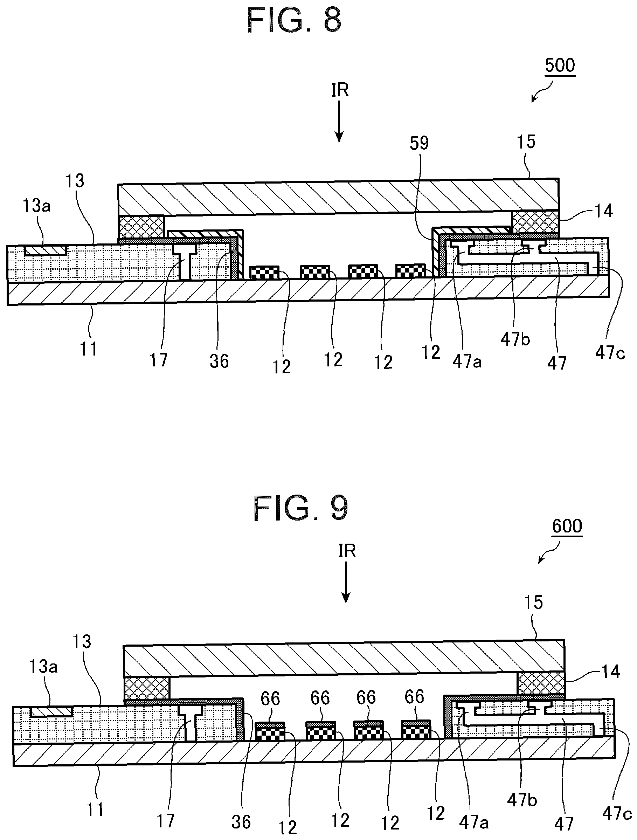

A thermal infrared detector 500 according to Embodiment 5 will be explained using Figs. 7 and 8. Fig. 7 is a plan view of the thermal infrared detector 500 according to Embodiment 5. Fig. 8 is a cross-sectional view taken along the VIII-VIII line of Fig. 7. Components having the same functions as those of the components explained in the above-mentioned embodiments are denoted by the same reference signs, and an explanation of the components will be omitted hereinafter.

As shown in Figs. 7 and 8, the thermal infrared detector 500 according to Embodiment 5 has a structure in which an antireflection film 59 is added to the structure of the thermal infrared detector 400 according to Embodiment 4.

The antireflection film 59 suppresses the reflection of an infrared ray which is stray light. This antireflection film 59 is further provided on a surface of an infrared absorption film 36 which is provided on a surface of a peripheral circuit 13. The antireflection film 59 is provided in such a way as to cover a portion of the surface of the infrared absorption film 36, the portion being inside the sealing part 14.

Although the antireflection film 59 is formed of, for example, ZnS, MgO, MgF2, and a multilayer film including these materials, the antireflection film is not limited to this example. The antireflection film 59 should just be a material whose refractive index in an infrared band of 8 to 14 µm is smaller than that of the infrared absorption film 36.

Therefore, the antireflection film 59 can suppress the reflection of stray light on the surface of the infrared absorption film 36. Therefore, the rate of absorption of stray light of the infrared absorption film 36 is improved.

The antireflection film 59 is formed into a desired shape in the producing process of Fig. 3C, by means of a film forming technology, a photoengraving technology, and an etching technology after an infrared absorption film 16 is formed.

As mentioned above, the thermal infrared detector 500 according to Embodiment 5 includes the antireflection film 59 which is provided on the surface of the infrared absorption film 36. Therefore, the thermal infrared detector 500 can improve the rate of absorption of stray light in the infrared absorption film 36.

### Embodiment 6.

A thermal infrared detector 600 according to Embodiment 6 will be explained using Fig. 9. Fig. 9 is a cross-sectional view of the thermal infrared detector 600 according to Embodiment 6. Components having the same functions as those of the components explained in the above-mentioned embodiments are denoted by the same reference signs, and an explanation of the components will be omitted hereinafter.

As shown in Fig. 9, the thermal infrared detector 600 according to Embodiment 6 has a structure in which infrared absorption films 66 are added to the structure of the thermal infrared detector 400 according to Embodiment 4.

The infrared absorption films 66 are provided on surfaces of infrared detection units 12. This infrared absorption films 66 are formed of the same material as that of an infrared absorption film 36 which is provided on a surface of a peripheral circuit 13. Therefore, because the rate of absorption of infrared rays increases in the infrared detection units 12, the temperature sensitivity is improved. Therefore, in the infrared detection units 12, the temperature resolution is improved.

By causing the infrared absorption film 16 to remain on the surfaces of the infrared detection units 12 when an infrared absorption film 16 is formed in the producing process of Fig. 3C using a photoengraving technology and an etching technology, the infrared absorption film 66 is formed.

As mentioned above, in the thermal infrared detector 600 according to Embodiment 6, the infrared absorption films 66 which are formed of the same material as that of the infrared absorption film 36 which is provided on the surface of the peripheral circuit 13 are provided on the surfaces of the infrared detection units 12. Therefore, in the thermal infrared detector 600, the rate of absorption of infrared rays of the infrared detection units 12 can be increased, and the temperature sensitivity can be improved. As a result, in the thermal infrared detector 600, the temperature resolution of the infrared detection units 12 can be improved.

It is to be understood that any combination of the above-mentioned embodiments can be made, various changes can be made in any component according to any one of the above-mentioned embodiments, or any component according to any one of the above-mentioned embodiments can be omitted within the scope of the present disclosure.

### INDUSTRIAL APPLICABILITY

Because the thermal infrared detector according to the present disclosure includes a heat waste wire which thermally connects between a substrate and an infrared absorption film, the thermal infrared detector can exhaust the heat of stray light absorbed thereby to the substrate having a large heat capacity, and thus the thermal infrared detector is suitable for use as thermal infrared detectors and so on.

### REFERENCE SIGNS LIST

11 substrate, 12 infrared detection unit, 13 peripheral circuit, 13a electrode pad, 14 sealing part, 15 sealing window, 16 infrared absorption film, 17 heat waste wire, 18 infrared detection area, 27 heat waste wire, 36 infrared absorption film, 47 heat waste wire, 47a, 47b, 47c end, 59 antireflection film, 66 infrared absorption film, 101 trench structure, 102 insulation film, 103 element, 104 connection wire, 105 insulation supporting leg, 106 wire, and 100, 200, 300, 400, 500, 600 thermal infrared detector.

## Claims

1. A thermal infrared detector comprising:
an infrared detection unit which is provided on a surface of a substrate, and which has an element to convert a temperature change caused by an incidence of an infrared ray into an electric signal;
a peripheral circuit which is provided in such a way as to surround the infrared detection unit on the surface of the substrate, to read the electric signal from the element;
a sealing part which is provided for the peripheral circuit in such a way as to surround the infrared detection unit;
a sealing window which is provided on the sealing part, and which forms an internal space in a sealed state for accommodating the infrared detection unit, together with the substrate, the peripheral circuit, and the sealing part;
an infrared absorption film to cover at least a surface portion inside the sealing part, out of a surface of the peripheral circuit; and
a heat waste wire which is provided inside the peripheral circuit, and which thermally connects between the substrate and the infrared absorption film.

2. The thermal infrared detector according to claim 1, wherein the heat waste wire has an end which is thermally connected to the infrared absorption film, and another end which is thermally connected to the substrate, outside the sealing part.

3. A thermal infrared detector comprising:
an infrared detection unit which is provided on a surface of a substrate, and which has an element to convert a temperature change caused by an incidence of an infrared ray into an electric signal;
a peripheral circuit which is provided in such a way as to surround the infrared detection unit on the surface of the substrate, to read the electric signal from the element;
a sealing part which is provided for the peripheral circuit in such a way as to surround the infrared detection unit;
a sealing window which is provided on the sealing part, and which forms an internal space in a sealed state for accommodating the infrared detection unit, together with the substrate, the peripheral circuit, and the sealing part; and
an infrared absorption film to cover at least a surface portion inside the sealing part, out of a surface of the peripheral circuit, the infrared absorption film being thermally connected to the sealing part.

4. The thermal infrared detector according to claim 3, comprising a heat waste wire which is provided inside the peripheral circuit,
wherein the heat waste wire is thermally connected to the infrared absorption film, inside the sealing part, is thermally connected to a portion of the infrared absorption film, the portion being thermally connected to the sealing part, and is thermally connected to the substrate, outside the sealing part.

5. The thermal infrared detector according to any one of claims 1 to 4, comprising an antireflection film which is provided on a surface of the infrared absorption film.

6. The thermal infrared detector according to any one of claims 1 to 5, wherein another infrared absorption film which is formed of a material identical to a material of the infrared absorption film provided on the surface of the peripheral circuit is provided on a surface of the infrared detector.

7. The thermal infrared detector according to any one of claims 1 to 6, wherein the infrared absorption film provided on the surface of the peripheral circuit and a grounding line provided in the peripheral circuit are electrically connected.

8. The thermal infrared detector according to any one of claims 1 to 7, wherein the infrared absorption film provided on the surface of the peripheral circuit is provided in such a way as to avoid an electric wire which the peripheral circuit has.

9. The thermal infrared detector according to any one of claims 1 to 8, wherein the element is multiple diodes which are connected in series to each other.

10. The thermal infrared detector according to claim 9, wherein the infrared absorption film is formed of a material identical to a material of a connection wire between the diodes.

11. The thermal infrared detector according to any one of claims 1 to 10, wherein the infrared absorption film is a silicon nitride film.

12. The thermal infrared detector according to any one of claims 1 to 11, wherein the infrared absorption film is an oxidized or nitrided metal film.

13. A method of producing the thermal infrared detector according to claim 1, comprising the steps of:
forming the infrared detector and the peripheral circuit on the surface of the substrate;
simultaneously forming the heat waste wire when forming the peripheral circuit;
thermally connecting the substrate and the heat waste wire;
electrically connecting the substrate and the peripheral circuit while electrically connecting the substrate and the infrared detection unit;
forming the infrared absorption film on the surface of the peripheral circuit and thermally connecting the infrared absorption film and the heat waste wire; and
joining the sealing part and the sealing window, and accommodating the infrared detection unit in the internal space.
